# EUROPÄISCHE PATENTSCHRIFT

(11) **EP 1 705 459 B1**
(45) Veröffentlichungstag und Bekanntmachung des Hinweises auf die Patenterteilung: **18.11.2009**
(21) Anmeldenummer: 05028116.1
(22) Anmeldetag: 22.12.2005
(51) Int. Cl.: G01C 21/20

(54) **System zur Bereitstellung von Navigationsinformationen für Personen innerhalb und außerhalb von Gebäuden**
System for providing navigation information for persons inside and outside buildings
Système destiné à la mise à disposition d'informations de navigation pour des personnes se situant à l'intérieur et à l'extérieur de bâtiments

(30) Priorität: 24.03.2005 DE 102005014299
(43) Veröffentlichungstag der Anmeldung: 27.09.2006
(73) Patentinhaber: Deutsches Zentrum für Luft- und Raumfahrt e.V., 51147 Köln (DE)
(72) Erfinder: Angermann, Michael, Dr., 82166 Gräfelfing (DE); Robertson, Patrick, Dr., 82541 Münsing/Wimpasing (DE); Fiebig, Uwe-Carsten, Dr., 82319 Starnberg (DE); Kammann, Jens, 80636 München (DE)
(74) Vertreter: von Kreisler Selting Werner

(56) Entgegenhaltungen:
- EP-A2- 1 313 079
- DE-A1- 10 121 260
- DE-U1- 20 114 245
- US-A1- 2005 033 515
- US-A1- 2005 060 088
- US-B1- 6 430 498

## Beschreibung

Die vorliegende Erfindung betrifft ein System zur Bereitstellung von Wegweisungsinformationen für Personen innerhalb und außerhalb von Gebäuden unter Verwendung von Hardware- und Software-Komponenten, zu denen eine Infrastruktur zur Abgabe von Navigationssignalen und eine zum Empfang dieser Navigationssignale ausgelegte, tragbare Navigationsvorrichtung gehören, die als Navigationsquellen außer einem Satellitennavigationsempfänger noch wenigstens einen weiteren Empfänger zum Empfang anders gearteter Navigationssignale innerhalb von Gebäuden enthält und der darüber hinaus eine Steuerungseinheit zur Verarbeitung der empfangenen Navigationssignale, eine die momentane Ausrichtung der Navigationsvorrichtung im Raum angebende Richtungsquelle und ein Anzeigegerät zur Anzeige der in der Steuerungseinheit aus den empfangenen Navigationssignalen ermittelten Wegweisungsinformationen zugeordnet sind.

In den letzten Jahren hat sich die Navigation mit Hilfe von Satellitensignalen (GNSS; Global Satellite Navigation Systems) als ein nicht mehr wegzudenkender Bestandteil unserer modernen technischen Infrastruktur entwickelt. Neben dem verbreitet angewandten US-System GPS (Global Positioning System) wird in Europa das sogenannte "Galileo"-System entwickelt, welches in wenigen Jahren in Betrieb genommen werden soll. Bislang liegen vielfältige Anwendungen dieser Systeme in den Bereichen Logistik, Verkehr und Überwachung von Personen und Gütern. GNSS hat die Eigenschaft, dass gleichzeitig im Wesentlichen "Sichtkontakt" zu mindestens drei Satelliten bestehen muss, um eine Positionsfeststellung vorzunehmen. Dies hat zur Folge, dass innerhalb von Gebäuden Anwendungen der Satellitennavigation nicht oder nur sehr eingeschränkt möglich sind.

Im Bereich der Personennavigation hat sich aber in einigen Anwendungsfeldern GNSS als Mittel der Wahl durchgesetzt, z.B. als mitgeführtes GPS-Empfangsgerät für den Wanderer und Bergsteiger oder für den Touristen zu Fuß in einer Stadt. Bei diesen bekannten Anwendungen muss sich der Benutzer allerdings im Klaren darüber sein, dass eine Navigation nur im Freien funktioniert, was beispielsweise beim Bergsteigen zutrifft. Jedoch haben Personen auch und gerade in Gebäuden das Bedürfnis nach Orientierung ("wo bin ich?") und mehr noch nach Wegweisung ("wo geht's lang?"; wie finde ich wieder raus?").

Beispiele sind das Führen in den Untergeschossen großer Städte, in Kaufhäusern, in Museen, in Flughäfen und Bahnhöfen ("wo ist der Flugsteig, das Gleis, das Taxi, das Gepäckband, der Check-in, ...?) sowie in fremden Firmengeländen oder Behördengebäuden ("wie geht es zu Herrn Schmidt?").

Einige dieser Aufgaben sind das Führen von Personen zu von ihnen vorgegebenen Zielen (z.B. in die Uhrenabteilung eines Kaufhauses), andere umfassen das Führen entlang gewisser Routen (z.B. durch ein Museum oder durch eine Ausstellung) oder zu Zielen, welche von einem übergeordneten System mehr oder weniger automatisch erkannt bzw. errechnet werden (z.B. nach der Landung im Flughafen das Führen zum Zollausgang oder nach dem Check-In im Flughafen die Wegweisung zum Flugsteig oder bei einem Brand zum nächsten Notausgang).

Es gibt viele Menschen, die nicht in der Lage sind, mit Karten oder Plänen umzugehen, oder die Probleme damit haben, eine Karte oder einen Plan auf die Umgebung abzubilden. Für diese Menschen ist eine Wegführung ungeeignet, die darin besteht, dass zwei Punkte auf einer Karte oder einem Plan eingetragen sind, von denen der eine die augenblickliche Position des Nutzers und der andere das Ziel oder Zwischenziel darstellt.

Bisher sind zwar Navigationssysteme für Fußgänger bekannt, zum Teil auch mit Richtungsbestimmung. Diese basieren aber zumeist auf GPS oder dedizierten Indoor-Systemen mit beispielsweise Infrarotbaken. Diese Systeme zeigen auch meist nur den aktuellen Ort des Nutzers auf einer Karte, in manchen Fällen noch die Richtung, in welcher der Nutzer sein Gerät hält. Es existieren Ausführungen von GPS-Empfängern in Uhren, aber diese sind reine Outdoor-Systeme und liefern, auch infolge der geringen Genauigkeit des angewandten zivilen GPS von einigen zehn Meter, keine genauen Wegweisungsinformationen.

Aus EP-A2-1 313 079 ist ein System zur Bereitstellung von Navigationsinformationen für Personen innerhalb und außerhalb von Gebäuden unter Verwendung von Hardware- und Software-Komponenten bekannt, zu denen in Form von RFID-Baken eine Infrastruktur zur Abgabe von Navigationssignalen und eine zum Empfang dieser Navigationssignale ausgelegte tragbare Navigationseinrichtung gehören, die als Navigationsquelle einen Navigationsempfänger in Form eines RFID-Lesers zum Empfang der Navigationssignale enthält. Darüber hinaus sind der Navigationsvorrichtung in Gestalt einer CPU eine Steuerungseinheit zur Verarbeitung der empfangenen Navigationssignale und ein Anzeigegerät zur Anzeige der in der CPU aus den empfangenen Navigationssignalen ermittelten Navigationsinformationen zugeordnet. Der Navigationsempfänger der tragbaren Navigationsvorrichtung ist zum Empfang von RFID-Transponder-Signalen eingerichtet. Zur Aussendung der Indoor-Navigationssignale ist im jeweiligen Gebäude eine Indoor-Infrastruktur vorgesehen, die aus RFID-Transpondern besteht. Die CPU errechnet aus den empfangenen Navigationssignalen Wegweisungsinformationen von einem Ausgangspunkt zu einem Ziel, die im Anzeigegerät dargestellt werden.

Aus US 2005/060088 A1 ist ein ähnliches System zur Fußgängernavigation bekannt, wobei in einer mitführbaren Navigationsvorrichtung ein Positionsfinder vorgesehen ist, der zum Ermitteln einer geographischen Position dieser Navigationsvorrichtung auf der Grundlage von mit Sensoren empfangenen Funksignalen ausgelegt ist und ein GPS-System umfassen kann. In einem Eingabemechanismus wird ein Zielort festgelegt und in einem Ausgabemechanismus werden dem nutzenden Fußgänger aus den Sensorsignalen mittels eines Prozessors errechnete Wegweisungsinformationen zu diesem Zielort angegeben, wobei auch mittels eines speziellen Sensors detektierte Weghindernisse angezeigt werden.

Aus US-B1-6 430 498 ist es bekannt, ein mobiles Endgerät mit einer Navigationseinrichtung, z.B. einem GPS-Empfänger, auszurüsten, wobei die Richtung zu einem gewünschten Zielort mittels eines Pfeils in der Anzeigevorrichtung des Endgeräts angezeigt werden soll. Zuerst erhält der Nutzer die Ortsinformation seines Endgeräts. Dann bekommt der Nutzer eine Richtungsinformation seines Endgeräts, die z.B. durch einen Kompass bestimmt wird. Die Kompassachse wird dann z.B. zur Spitze des Endgeräts hin ausgerichtet, an der sich die Pfeilrichtung orientiert.

Aus DE 101 21 260 A1 ist ein Navigationssystem bekannt, das in der Lage ist, auch innerhalb eines Gebäudes oder wenn kein Satellitennavigationssignal zu empfangen ist, die aktuelle Position genau zu bestimmen. Dieses System sieht für eine Person eine tragbare Navigationsvorrichtung vor, die mindestens einen Empfänger zum Empfang von Positionsinformationen, Verarbeitungsmittel zur Verarbeitung empfangener Positionsinformationen und Anzeigemittel zur Anzeige empfangener Positionsinformationen umfasst, wobei mindestens einer der Empfänger derart aufgebaut ist, dass Positionsinformationssignale empfangbar sind, die keine von Satelliten stammenden Signale sind. Aber auch bei diesem bekannten Indoor-Navigationssystem werden aus den ermittelten Positionskoordinaten eines Zielortes und eines aktuellen Aufenthaltsortes auf Karten Wege dargestellt oder ausgedruckt, die eine Person z.B. bei der Wiederauffindung des Parkplatzes seines Autos in einer Tiefgarage verwenden kann.

Anstatt dem Nutzer eine Navigation mit Hilfe von Kartenmaterial anzubieten, soll ihm aufgabengemäß durch die vorliegende Erfindung eine unmittelbare Wegweisung auf seinem mitgeführten Anzeigegerät geboten werden. Es soll ihm nur die Richtung angezeigt werden, in die er unmittelbar als nächstes gehen soll, optional verbunden mit wenigen, leicht verständlichen Hinweisen, ähnlich wie sie auch der Autofahrer von einem Fahrzeugnavigationsgerät erhält, wie z.B. "Treppe rauf", "Aufzug nach unten nehmen", "am Ende rechts" oder dergleichen. Als eine sinnvolle äußere Gestaltung einer Wegweisungsdarbietung erscheint z.B. eine Umsetzung als Armbandgerät oder direkt integriert in einer Armbanduhr. Der Blick auf die Armbanduhr ist ein wohl eingeübter motorischer, reflexartiger Vorgang, bisher mit der Fragestellung "Wie lautet die Uhrzeit?" verbunden. Es erscheint vorteilhaft, die ähnlich lautende Fragestellung "Wo muss ich lang laufen?" in dieselbe Reflexhandlung münden zu lassen.

Es sind aber ebenfalls andere Gestaltungen des Anzeigegeräts möglich. Die technische Aufgabenstellung ist somit darin zu sehen, innerhalb eines Systems eine Navigationsvorrichtung, die aus verschiedenen Navigations- und Richtungssensoren, einem Anzeigegerät sowie einer Steuerungseinheit besteht, so zu gestalten, dass sie einer Person, die z.B. zu Fuß oder auf dem Rad, Tretroller oder mit Inline-Skates innerhalb oder außerhalb eines Gebäudes unterwegs ist, jederzeit präzise, leicht verständliche Wegweisungsinformationen zu einem Ziel bereitstellt.

Gemäß der vorliegenden Erfindung, die sich auf ein System der eingangs genannten Art bezieht, wird diese Aufgabe in vorteilhafter Weise dadurch gelöst, dass der wenigstens eine weitere Empfänger der tragbaren Navigationsvorrichtung zum Empfang von Indoor-Navigationssignalen in Form von LORAN-C-Signalen und/oder Indoor-UWB("Ultra-Wideband")-Signalen und/oder Indoor-WLAN-Signalen und/oder Indoor-Bluetooth-Signalen, Infrarot-Signalen, Ultraschall-Signalen und/oder Indoor-Zigbee-Signalen und/oder RFID-Transponder-Signalen oder ähnlichen Funksignalen eingerichtet ist, dass zur Aussendung der Indoor-Navigationssignale im jeweiligen Gebäude und möglicherweise auch in solchen außerhalb eines Gebäudes befindlichen Bereichen, die für einen Empfang von Satellitennavigationssignalen wegen Störungsanfälligkeit nicht oder schlecht geeignet sind, eine Indoor-Infrastruktur vorgesehen ist, die aus LORAN-C-, UWB-, WLAN- oder Bluetooth-Funkstationen oder -Baken, RFID-Transpondern, Signalquellen für Infrarot- oder Ultraschallortung und/oder dergleichen besteht, dass die Steuerungseinheit aus den empfangenen Navigationssignalen Wegweisungsinformationen von einem Ausgangspunkt zu einem Ziel errechnet, dass in der Navigationsvorrichtung ein die Steuerungseinheit ansteuernder Aggregator vorgesehen ist, der aus den Navigationsquellen und Richtungsquellen und gegebenenfalls noch weiteren Sensoren eine Wahrscheinlichkeitsdichte des Ortes und der Richtung bestimmt, in der das Anzeigegerät der Navigationsvorrichtung gehalten wird, dass zur Verknüpfung einiger oder aller Komponenten der von einer Person mitgeführten Navigationsvorrichtung ein Nahgebietsnetz vorgesehen ist, welches dazu dient, dass die verknüpften Komponenten miteinander kommunizieren, und dass im Anzeigegerät die Wegweisungsinformationen dargestellt werden.

Die aufgabengemäß geforderte Funktionalität wird dadurch ermöglicht, dass die dem System nach der Erfindung zu Grunde liegende Technik über eine Orientierungsreferenz verfügt. Dies geht über eine reine Positionsbestimmung hinaus.

Die Steuerungseinheit kann in der am Körper einer Person mitführbaren Navigationsvorrichtung selbst untergebracht werden.

Sie kann aber vorteilhaft auch zentral an einem entfernten Ort und mit Kommunikationsverbindung zur Navigationsvorrichtung, z.B. über das Internet, untergebracht werden. Die Steuerungseinheit kann aber auch physikalisch nur zum Teil in der am Körper einer Person mitführbaren Navigationsvorrichtung untergebracht werden, wobei dann der übrige Teil zentral an einem entfernten Ort und mit Kommunikationsverbindung zur Navigationsvorrichtung angeordnet wird, z.B. über das Internet. In diesem Fall kann der mitgeführte Teil verhältnismäßig klein sein, der dann mit dem erheblich größeren Teil der Steuerungseinheit kommunizieren kann. Prinzipiell kann diese Berechnung von irgendeiner erreichbaren Steuerungseinheit, beispielsweise von jedem beliebigen Computer durchgeführt werden, der an einer anderen Stelle zentral untergebracht ist.

Vorteilhafte und zweckmäßige Weiterbildungen und Ausführungen des Systems nach der vorliegenden Erfindung sind in den sich unmittelbar oder mittelbar auf den Patentanspruch 1 rückbeziehenden Unteransprüchen angegeben.

Die Erfindung beruht auf einem System, welches aus verschiedenen, zum Teil optionalen Systembestandteilen aufgebaut ist. Es werden im Folgenden die Systemtopologie, die Hardware- und Software-Komponenten sowie deren Zusammenwirken beschrieben. Durch das System nach der Erfindung wird erreicht, dass Personen in Indoor- und Outdoor-Umgebungen Wegweisungsinformationen auf ein beispielsweise am Handgelenk getragenes, am Fahrrad oder am Fahrrad-, Ski-, Inline-Skating-Helm montiertes oder in die Brille projizierendes Anzeigegerät erhalten.

Das System nach der Erfindung enthält mindestens eine Navigationsquelle. Diese Navigationsquelle kann entweder als Satelliten-Navigationsquelle (z.B. GPS- oder Galileo-Empfänger) oder als Empfänger von Indoor-Navigationssignalen ausgeführt sein. Zu den Indoor-Navigationssignalen gehöhren insbesondere UWB("Ultra Wideband")-Signale, RFID("Radio Frequency Identification")-Signale, WLAN-, Bluetooth-, Infrarot-, Ultraschall- oder Zigbee- oder ähnliche Signale. Eine der Navigationsquellen kann als LORAN-C-Empfänger ausgeführt sein. Im Fall der Verwendung von RFID-Signalen ist die Navigationsquelle als RFID-Auslesegerät ausgeführt.

Eine weitere Komponente des Systems nach der Erfindung setzt sich aus einer oder mehreren Richtungsquellen zusammen, welche die Raumlage eines darin integrierten Sensors oder eines Teiles einer weiteren Gesamt-Systemkomponente, wie z.B. die Antenne einer der Navigationsquellen, bestimmt/bestimmen.

Hinzu kommt beim System nach der Erfindung eine Steuerungseinheit welche die Wegweisungsinformationen errechnet. Diese Wegweisungsinformationen werden vorzugsweise bei jeder Bewegung des Nutzers oder bei Änderung weiterer Parameter aus den anderen Komponenten aktualisiert (dynamische Routenberechnung). Somit kann auch auf Fehlverhalten des Nutzers oder auf plötzliche Verbesserungen in der Positionsgenauigkeit reagiert werden.

Zu den optionalen Komponenten des Systems nach der Erfindung gehören weitere Sensoren, z.B. Bewegungsmesser, Höhenmesser, Beschleunigungsmesser, Herzfrequenzmesser, und weitere Ausgabegeräte, beispielsweise akustische Ausgabegeräte, die z.B. per Kurzreichweitenkommunikation mit der Steuerungseinheit verbunden sind, Vibrationsgeräte, weitere visuelle Anzeigegeräte, die z.B. per Kurzreichweitenkommunikation versorgt werden, und Geräte, die über den Tastsinn arbeiten. Diese weiteren Ausgabegeräte können zum einen Wegweisungsinformationen wiederholen oder verfeinern oder sie können andererseits auf das Vorhandensein neuer Wegweisungsinformationen am Anzeigegerät hinweisen.

Eine weitere optionale Komponente des Systems nach der Erfindung ist eine Kontextquelle. Diese Kontextquelle stellt weitere Informationen an die Steuerungseinheit bereit, welche Informationen über den Nutzer enthält, welche auf die Wegweisungsinformationen und deren Darbietung von Bedeutung sind. Beispiele solcher Informationen sind Alter und körperliche Verfassung der nutzenden Person, die Eile, mit der diese Person das Ziel zu erreichen hat, Wetterumstände oder aktuelle Baumaßnahmen, welche die Zielwegberechnung beeinflussen können. Dazu kann die Steuerungseinheit diese Kontextinformationen in die Bewertung der Routen aufnehmen, indem z.B. Teilstrecken der Routen bei der Bestimmung der "Routenkosten" unterschiedlich gewichtet werden, so wie dies an sich bereits aus der Fahrzeugnavigation bei der unterschiedlichen Bewertung von unterschiedlichen Straßentypen oder aktuellen Verkehrsverhältnissen bekannt ist. Es können auch mehrere Kontextquellen vorgesehen werden.

Eine weitere optionale Komponente des Systems nach der Erfindung ist eine Karten-Quelle, welche Karteninformationen der örtlichen Umgebung an die Steuerungseinheit und andere Komponenten bereitstellt oder solche Informationen bereitstellt, mit deren Hilfe die Navigationsquellen und Richtungsquellen ihre jeweiligen Aufgaben erfüllen können bzw. verbessern können. Derartige Karten-Quellen können z.B. Erdmagnetfeld-Missweisungskarten, Karten, in denen die Standorte von Navigationsbaken eingetragen sind, Karten der Verfügbarkeit und Genauigkeit von GNSS-Systemen, Informationen für das bekannte Map-Matching-Verfahren oder Kartenquellen im bekannten Soft-Location(SoLo)-Verfahren sein.

Die Karten-Quelle und die Kontextquellen können ihrerseits auf Funkkommunikation, z.B. via GPRS, GSM, UMTS, WLAN, Bluetooth, UWB, zurückgreifen, um die notwendigen Karten und Umgebungsdaten und Kontextdaten von einer in der Infrastruktur oder im Internet liegenden Einheit zu erhalten. Beide Komponenten können darüber hinaus einen Speicher umfassen, in dem sie temporär oder dauerhaft die genannten Daten vorhalten können.

Eine weitere Komponente des Systems nach der Erfindung ist ein Aggregator, welcher die Signale der Navigationsquellen und der Richtungsquellen und gegebenenfalls der weiteren Sensoren zusammenfasst und daraus eine neue Position und/oder Richtungsinformation bestimmt, z.B. durch Selektion, Mittelung oder mit Hilfe von Algorithmen nach dem bekannten Soft-Location(SoLo)-Verfahren oder nach dem bekannten Monte-Carlo "particle filtering"-Verfahren oder nach dem bekannten Kalmanfilter-Verfahren. Der Aggregator oder die Steuereinheit kann auch die ihm zur Verfügung gestellten Richtungsinformationen oder durch ihn bereits errechnete Zwischenwerte der Richtungsinformationen so umrechnen, dass diese sich auf die Lage des Anzeigegerätes beziehen. Hierzu können z.B. die Raum-Winkeldifferenzen zwischen der Lage der Sensoren der Richtungsquellen und der Lage des Anzeigegerätes beim Ablesen z.B. unter der Annahme einer üblichen Armhaltung beim Ablesen des am Arm getragenen Anzeigegerätes verwendet werden, z.B. durch Vorkonfiguration auf feste Werte, die sich aus der Geometrie der Systemkomponenten ergeben.

Die Steuerungseinheit der von einer nutzenden Person getragenen Navigationsvorrichtung des Systems nach der Erfindung kann vorzugsweise die Qualität der Positionsinformation und Richtungsinformation am Ausgang des Aggregators verwenden, um die Wegweisungsberechnung daran anzupassen. Auf diese Weise können auch Mehrdeutigkeiten der Ortsinformation dazu führen, dass eine Anweisung vorgeschlagen wird, die in allen Fällen der Mehrdeutigkeit zum Ziel führt, indem alle Mehrdeutigkeiten als Hypothesen des Startpunktes bei der Routenberechnung eingesetzt werden und solche Wege bevorzugt werden, bei denen die nächste(n) Anweisung(en) identisch ist/sind.

Eine weitere Vorgehensweise der Steuerungseinheit liegt in der Anwendung einer Kostenfunktion bei der Routenberechnung, welche auch die Unsicherheit des aktuellen Ortes aufnimmt. Auch hierdurch werden solche Routen bevorzugt, bei denen sich die derzeitige Unsicherheit des aktuellen Ortes am geringsten auswirkt. Ferner kann die Steuerungseinheit die Bewertung der Routen so ansetzen, dass solche Routen bevorzugt werden, bei denen zu erwarten ist, dass sich beim Befolgen ihrer Anweisungen die Navigations- und/oder Richtungsanweisung verbessern wird. Es kann sich dabei z.B. um Anweisungen handeln, die dazu führen, dass der Nutzer mit hoher Wahrscheinlichkeit in die Nähe eines großen Fensters oder ähnlicher Konstruktionen oder Öffnungen mit GPS-Signal-Empfangsmöglichkeit gelangt.

Eine weitere optionale Komponente des Systems nach der Erfindung ist ein Nahgebietsnetz, d.h. eine Netzwerkkomponente, welche dazu dient, dass andere Systemkomponenten miteinander kommunizieren können. Dieses Nahgebietsnetz verbindet somit die von der Person mitgeführten Geräte und kann z.B. als sogenanntes "Body Area Network" ausgeprägt sein, insbesondere unter Verwendung von Funktechnologien, drahtgebunden oder mittels Signalübertragung durch den menschlichen Körper. Hierzu müssen alle Komponenten, welche das Nahgebietsnetz zur Datenkommunikation nutzen, über entsprechende Netzwerkadapter, wie z.B. Funkmodule and dazugehörige Steuerungen, verfügen.

Alle aufgeführten Komponenten der Navigationsvorrichtung des Systems nach der Erfindung können als physikalisch eigenständige Komponenten ausgeführt sein oder mit anderen Komponenten integriert werden. So kann zum Beispiel das Anzeigegerät zusammen mit einem oder mehreren der weiteren Sensoren und/oder Navigations- und Richtungsquellen in einem Uhrgehäuse integriert sein. Es lässt sich auch die Steuerungseinheit mit den Kontextquellen und der Karten-Quelle in einem Mobiltelephon integrieren.

Die genannte Integration kann sich auf die Verwendung gemeinsamer Gehäuse oder Halterungen beschränken. Sie kann aber auch die Verwendung gemeinsamer Komponenten, wie z.B. Stromversorgung, Antennen, Funkeinheiten und Eingabe/Ausgabe-Einheiten, umfassen. Darüber hinaus kann die Integration auf Software-Ebene stattfinden, so dass die Komponenten als Software-Module auf einer gemeinsamen Rechnerplattform abgebildet werden und ablaufen.

Die Indoor-Infrastruktur stellt im System nach der Erfindung eine weitere Komponente dar. Diese besteht aus Modulen, welche die Indoor-Ortung oder Indoor-Richtungsfindung ermöglichen bzw. erleichtern. Diese Infrastruktur kann auch in Umgebungsbedingungen eingesetzt werden, die streng genommen keine Indoor-Umgebungen sind, sondern Umgebungen unter freiem Himmel, die aber unter starken Störungen der GNSS-Signale leiden. Solche problematischen Outdoor-Umgebungen sind z.B. tiefe Straßenschluchten, Innenhöfe, Arkaden, Torbögen und Stadien.

Die Indoor-Infrastruktur besteht z.B. aus aktiven und/oder passiven RFID-Tags, Funkstationen und Baken, Signalquellen für Infrarot- oder Ultraschall-Ortung und speziellen Markierungen, welche von im visuellen Bereich arbeitenden Kameras oder Infrarotkameras erkannt werden. Die Indoor-Infrastruktur kann ebenfalls in das Nahgebietsnetz eingebunden werden, z.B. indem sich die Komponenten der Indoor-Infrastruktur temporär als Netz-Knoten in diesem Nahgebietsnetz einfügen, beispielsweise nach einem aus dem Ad-Hoc-Networking-Prinzip bekannten Verfahren.

Die Erfindung wird im Folgenden anhand eines in zwei Figuren dargestellten Ausführungsbeispiels erläutert. Es zeigen:
- Fig.1: in einer blockschaltbildartigen Darstellung den Aufbau des Ausführungsbeispiels eines Systems nach der Erfindung, und
- Fig.2: ein Anzeigegerät einer Navigationsvorrichtung dieses Systems in einer Ansicht von oben.

Dieses Ausführungsbeispiel zeigt eine Systemkonfiguration mit allen Komponenten, auch den optionalen.

Es ist ein Anzeigegerät 1 vorgesehen, das als Uhr ausgeprägt und zusätzlich mit einem weiteren Ausgabegerät 2 in Form eines Vibrationsgebers im Uhrgehäuse integriert ist. Dieser Vibrationsgeber 2 wird aktiviert, wenn das Anzeigegerät 1 neue Wegweisungsinformationen für den Nutzer anzeigt. Es ist noch ein weiteres Ausgabegerät 3 in Form eines per Funk angebundenen Kopfhörers vorhanden, welches die Wegweisungsinformationen auch per Sprachausgabe akustisch ausgibt. Eine Steuerungseinheit 4 berechnet die Wegweisungsinformationen und steuert das Anzeigegerät 1 und die beiden weiteren Ausgabegeräte 2 und 3 an.

Eine Kontextquelle 5 stellt der Steuerungseinheit 4 persönliche Einstellungen des Nutzers und aktuelle Daten, die sich auf die Umgebung beziehen, bereit, wie z.B. "Alter 48, männlich, gehbehindert, es herrscht Schneefall". Diese Daten werden von der Steuerungseinheit 4 verwendet, um in diesem Fall bei der Routenberechnung vorzugsweise Teilstrecken ohne Treppen und im Innenraumbereich zu bevorzugen.

Ein Aggregator 6 in Form eines "Soft-Location"-Aggregators bestimmt aus mehreren im Ausführungsbeispiel gezeigten Navigationsquellen 7, nämlich Empfängern für GPS/Galileo, RFID, Indoor-Bluetooth und Indoor-WLAN, und Richtungsquellen 8, nämlich einem Magnetkompass und einem GNSS-Richtungsauswerter, und einem einen weiteren Sensor bildenden Schrittzähler 9 eine Wahrscheinlichkeitsdichte des Ortes und der Richtung, in der das Anzeigegerät 1 gehalten wird.

Ein Pulsmessgerät 10, das ebenfalls einen weiteren Sensor bildet, nimmt Einfluss auf die Routenberechnung, die bei hohem Puls Routenabschnitte mit Treppen weniger bevorzugt. Eine Karten-Quelle 11 dient der Berechnung der Wegweisungsinformationen und der Orte, an denen sich RFID-Baken befinden, sowie als Eingabe für den "Soft-Location"-Aggregator 6.

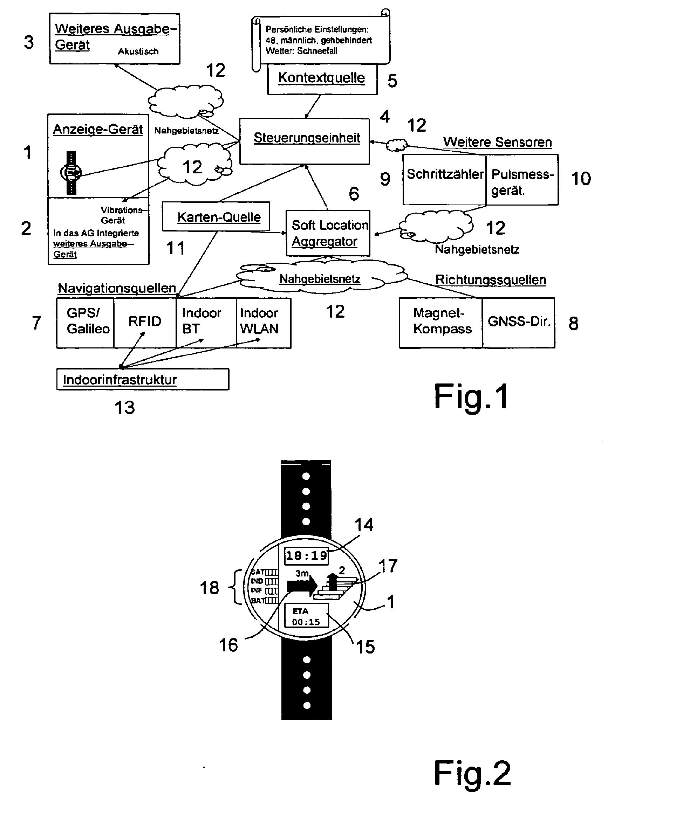

Ein in Fig.1 in Gestalt von Wolken dargestelltes Nahgebietsnetz 12 auf Funkbasis dient zur Verbindung einiger der Systemkomponenten. Eine Indoor-Infrastruktur 13 weist passive und aktive RFID-Tags sowie Bluetooth- und WLAN-Stationen auf. Diese RFID-Tags werden von den betreffenden Navigationsquellen 7 ausgelesen und zur Positionierung verwendet. Die Funk-Verbindungen zwischen den von der nutzenden Person mitgetragenen und zu den Navigationsquellen 7 gehörenden WLAN- und Bluetooth-Sendeempfängern und den als Indoor-Infrastruktur 13 installierten WLAN- und Bluetooth-Stationen werden verwendet, um die Entfernung zu letzteren zu schätzen und daraus nach bekannten Verfahren die Wahrscheinlichkeitsverteilung der Position zu bestimmen. Ferner erhalten Kontextquelle 5 und Kartenquelle 11 ihre Daten über die Kommunikationseinrichtung oder Indoor-Infrastruktur 13.

Das Anzeigegerät 1 ist im Ausführungsbeispiel als Armbanduhr ausgeführt und in Fig.2 detailliert in einer Ansicht von oben auf eine Anzeigefläche dargestellt. Es besitzt auf seiner Anzeigefläche neben der Uhrzeitanzeige 14 eine Anzeige 15 der bis zur Ankunft am Ziel geschätzten Zeitdauer. Ein großer Pfeil 16 zeigt nach rechts, wobei diesem Pfeil die Textangabe 3m beigefügt ist; in Pfeilrichtung soll der Nutzer 3 Meter weit laufen und dann entsprechend dem kleinen Pfeil 17 mit der Angabe 2 eine Treppe zwei Stockwerke hochsteigen. Ferner sind auf dem Anzeigegerät 1 vier Indikatoren 18 vorgesehen, die über die aktuelle Güte der GNSS-Signale "SAT" bzw. der Indoor-Navigationssignale "IND", über den Stand der gespeicherten Karten- und Zusatzdaten "INF" bzw. über die aktuellen Batteriereserven "BAT" Auskunft geben.

### Bezugszeichenliste

- 1: Anzeigegerät
- 2, 3: Weitere Ausgabegeräte
- 4: Steuerungseinheit
- 5: Kontextquelle
- 6: Aggregator
- 7: Navigationsquellen
- 8: Richtungsquellen
- 9: Schrittzähler (weiterer Sensor)
- 10: Pulsmessgerät (weiterer Sensor)
- 11: Karten-Quelle
- 12: Nahgebietsnetz
- 13: Indoor-Infrastruktur
- 14: Uhrzeitanzeige
- 15: Zeitdaueranzeige
- 16: Großer Pfeil
- 17: Kleiner Pfeil
- 18: Indikatoren

## Patentansprüche

1. System zur Bereitstellung von Wegweisungsinformationen für Personen innerhalb und außerhalb von Gebäuden unter Verwendung von Hardware- und Software-Komponenten, zu denen eine Infrastruktur zur Abgabe von Navigationssignalen und eine zum Empfang dieser Navigationssignale ausgelegte, tragbare Navigationsvorrichtung gehören, die als Navigationsquellen (7) außer einem Satellitennavigationsempfänger noch wenigstens einen weiteren Empfänger zum Empfang anders gearteter Navigationssignale innerhalb von Gebäuden enthält und der darüber hinaus eine Steuerungseinheit (4) zur Verarbeitung der empfangenen Navigationssignale, eine die momentane Ausrichtung der Navigationsvorrichtung im Raum angebende Richtungsquelle (8) und ein Anzeigegerät (1) zur Anzeige der in der Steuerungseinheit aus den empfangenen Navigationssignalen ermittelten Wegweisungsinformationen zugeordnet sind, **dadurch gekennzeichnet, dass** der wenigstens eine weitere Empfänger der tragbaren Navigationsvorrichtung zum Empfang von Indoor-Navigationssignalen in Form von LORAN-C-Signalen und/oder Indoor-UWB("Ultra-Wideband")-Signalen und/oder Indoor-WLAN-Signalen und/oder Indoor-Bluetooth-Signalen, Infrarot-Signalen, Ultraschall-Signalen und/oder Indoor-Zigbee-Signalen und/oder RFID-Transponder-Signalen oder ähnlichen Funksignalen eingerichtet ist, dass zur Aussendung der Indoor-Navigationssignale im jeweiligen Gebäude und möglicherweise auch in solchen außerhalb eines Gebäudes befindlichen Bereichen, die für einen Empfang von Satellitennavigationssignalen wegen Störungsanfälligkeit nicht oder schlecht geeignet sind, eine Indoor-Infrastruktur (13) vorgesehen ist, die aus LORAN-C-, UWB-, WLAN- oder Bluetooth-Funkstationen oder -Baken, RFID-Transpondern, Signalquellen für Infrarot- oder Ultraschallortung und/oder dergleichen besteht, dass die Steuerungseinheit (4) aus den empfangenen Navigationssignalen Wegweisungsinformationen von einem Ausgangspunkt zu einem Ziel errechnet, dass in der Navigationsvorrichtung ein die Steuerungseinheit ansteuernder Aggregator (6) vorgesehen ist, der aus den Navigationsquellen (7) und Richtungsquellen (8) und gegebenenfalls noch weiteren Sensoren (9) eine Wahrscheinlichkeitsdichte des Ortes und der Richtung bestimmt, in der das Anzeigegerät (1) der Navigationsvorrichtung gehalten wird, dass zur Verknüpfung einiger oder aller Komponenten der von einer Person mitgeführten Navigationsvorrichtung ein Nahgebietsnetz (12) vorgesehen ist, welches dazu dient, dass die verknüpften Komponenten miteinander kommunizieren, und dass im Anzeigegerät die Wegweisungsinformationen (16, 17) dargestellt werden.

2. System nach Anspruch 1, **dadurch gekennzeichnet, dass** mittels Berechnung in der Steuerungseinheit (4) die Wegweisungsinformationen bei jeder Bewegung des die Navigationsvorrichtung mitführenden Nutzers aktualisiert werden, so dass eine dynamische Routenberechnung erreicht wird.

3. System nach Anspruch 1 oder 2, **dadurch gekennzeichnet, dass** die Steuerungseinheit (4) in der am Körper einer Person mitführbaren Navigationsvorrichtung untergebracht ist.

4. System nach einem der Ansprüche 1 oder 2, **dadurch gekennzeichnet, dass** die Steuerungseinheit (4) physikalisch nicht in der am Körper einer Person mitführbaren Navigationsvorrichtung, sondern zentral an einem entfernten Ort und mit Kommunikationsverbindung zur Navigationsvorrichtung untergebracht ist.

5. System nach einem der Ansprüche 1 oder 2, **dadurch gekennzeichnet, dass** die Steuerungseinheit (4) physikalisch nur zum Teil in der am Körper einer Person mitführbaren Navigationsvorrichtung untergebracht ist und der übrige Teil zentral an einem entfernten Ort und mit Kommunikationsverbindung zur Navigationsvorrichtung angeordnet ist.

6. System nach einem der vorhergehenden Ansprüche, **dadurch gekennzeichnet, dass** als weiterer Sensor ein Höhenmesser und/oder ein Bewegungsmesser und/oder ein Schrittzähler (9) und/oder ein Beschleunigungsmesser und/oder ein Herzfrequenzmesser (10) vorgesehen ist.

7. System nach einem der vorhergehenden Ansprüche, **dadurch gekennzeichnet, dass** außer dem Anzeigegerät (1) in der Navigationsvorrichtung noch ein oder mehrere weitere Ausgabegeräte (2, 3) vorgesehen sind, die in Form eines akustischen Ausgabegeräts (3), eines Vibrationsgeräts (2), weiterer visueller Anzeigegeräte und/oder über den Tastsinn arbeitender Geräte realisierbar sind.

8. System nach Anspruch 7, **dadurch gekennzeichnet, dass** ein verwendetes akustisches Ausgabegerät (3) und/oder ein verwendetes weiteres visuelles Ausgabegerät per Kurzreichweitenkommunikation (12) mit der Steuerungseinheit (4) der Navigationsvorrichtung verbunden ist.

9. System nach einem der vorhergehenden Ansprüche, **dadurch gekennzeichnet, dass** in der Navigationsvorrichtung eine oder mehrere Kontextquellen (5) vorgesehen sind, welche für die Steuerungseinheit (4) weitere Informationen bereitstellen, die Informationen über den Nutzer enthalten, welche auf die Wegweisungsinformationen und deren Darbietung auf dem Anzeigegerät (1) oder auf den weiteren Ausgabegeräten (2, 3) von Bedeutung sind.

10. System nach einem der vorhergehenden Ansprüche, **dadurch gekennzeichnet, dass** in der Navigationsvorrichtung eine Karten-Quelle (11) vorgesehen ist, welche Karteninformationen der örtlichen Umgebung an die Steuerungseinheit (4) und/oder andere Komponenten der Navigationsvorrichtung bereitstellt bzw. solche Informationen bereitstellt, mit deren Hilfe die Navigationsquellen (7) und/oder Richtungsquellen (8) und/oder Steuerungseinheit (4) ihre jeweiligen Aufgaben erfüllen oder verbessern können.

11. System nach Anspruch 9 oder 10, **dadurch gekennzeichnet, dass** die Kontextquellen (5) und die Karten-Quelle (11) ihrerseits auf Funkkomunikation z.B. via GPRS, GSM, UMTS, WLAN, Bluetooth, UWB zurückgreifen, um die betreffenden Kontextdaten bzw. Karten und Umgebungsdaten von einer in der Infrastruktur oder im Internet liegenden Einheit zu erhalten.

12. System nach einem der Ansprüche 9 bis 11, **dadurch gekennzeichnet, dass** die Kontextquellen (5) und/oder die Karten-Quelle (11) einen Speicher umfassen, in dem die betreffenden Daten temporär vorgehalten werden.

13. System nach einem der vorhergehenden Ansprüche, **dadurch gekennzeichnet, dass** der in der Navigationsvorrichtung vorgesehene Aggregator (6) die Signale der Navigationsquellen (7) und der Richtungsquellen (8) und gegebenenfalls der weiteren Sensoren (9, 10) zusammenfasst und daraus eine neue Position und/oder Richtungsinformation bestimmt.

14. System nach Anspruch 13, **dadurch gekennzeichnet, dass** die Bestimmung der neuen Position und/oder der Richtungsinformation durch Selektion, Mittelung oder durch Algorithmen nach dem bekannten Soft-Location(SoLo)-Verfahren erfolgt.

15. System nach Anspruch 13, **dadurch gekennzeichnet, dass** die Bestimmung der neuen Position und/oder der Richtungsinformation nach dem Monte-Carlo-"Particle-Filter"-Verfahren erfolgt.

16. System nach Anspruch 13, **dadurch gekennzeichnet, dass** die Bestimmung der neuen Position und/oder der Richtungsinformation nach dem Kalmanfilter-Verfahren erfolgt.

17. System nach Anspruch 13, **dadurch gekennzeichnet, dass** der Aggregator (6) die ihm zur Verfügung gestellten Richtungsinformationen oder durch ihn bereits errechnete Zwischenwerte der Richtungsinformationen so umrechnet, dass diese sich auf die Lage des Anzeigegeräts (1) beziehen.

18. System nach Anspruch 17, **dadurch gekennzeichnet, dass** für diese Umrechnung im Aggregator (6) oder in der Steuerungseinheit (4) die Raum-Winkeldifferenzen zwischen der Lage der Sensoren der Richtungsquellen (8) zu der Lage des Anzeigegeräts (1) beim Ablesen verwendet werden.

19. System nach Anspruch 18, **gekennzeichnet durch** eine Vorkonfiguration auf feste Werte, die sich aus der Geometrie der Systemkomponenten ergeben.

20. System nach Anspruch 1, **dadurch gekennzeichnet, dass** die Steuerungseinheit (4) die Qualität der Positionsinformation und Richtungsinformation am Ausgang des Aggregators (6) verwendet, um die Wegweisungsberechnung daran anzupassen.

21. System nach Anspruch 20, **dadurch gekennzeichnet, dass** bei Vorliegen von Mehrdeutigkeiten der Positionsinformation alle Mehrdeutigkeiten als Hypothesen des Startpunktes bei der Routenberechnung in der Steuerungseinheit (4) eingesetzt werden und solche Routen bevorzugt werden, bei denen die nächste(n) Anweisung(en) identisch ist/sind.

22. System nach Anspruch 20, **dadurch gekennzeichnet, dass** bei der Routenberechnung in der Steuerungseinheit (4) eine Kostenfunktion angewendet wird, welche auch die Unsicherheit des aktuellen Ortes aufnimmt, so dass auch hier solche Routen bevorzugt werden, bei denen sich die derzeitige Unsicherheit des aktuellen Ortes am wenigsten auswirkt.

23. System nach Anspruch 20, **dadurch gekennzeichnet, dass** die Steuerungseinheit (4) die Bewertung der Routen so ansetzt, dass solche Routen bevorzugt werden, bei denen zu erwarten ist, dass sich beim Befolgen ihrer Anweisung(en) die Navigations- und Richtungsanweisung verbessern wird.

24. System nach Anspruch 23, **dadurch gekennzeichnet, dass** die Steuerungseinheit (4) solche Routen bevorzugt, bei denen Anweisungen gegeben werden, die dazu führen, dass der Nutzer mit hoher Wahrscheinlichkeit in die Nähe eines oder mehrerer großer Fenster oder ähnlicher Konstruktionen oder Öffnungen kommt, die an der Navigationsvorrichtung den Empfang von Satellitennavigationssignalen ermöglichen.

25. System nach Anspruch 1, **gekennzeichnet durch** eine Ausführung des Nahgebietsnetzes (12) als sogenanntes "Body Area Network", bei dem alle diejenigen Komponenten, die das Nahgebietsnetz nutzen, über entsprechende Netzwerkadapter und dazugehörige Steuerungseinrichtungen verfügen.

26. System nach Anspruch 25, **dadurch gekennzeichnet, dass** das Nahgebietsnetz (12) unter Verwendung einer Funktechnologie arbeitet.

27. System nach Anspruch 25, **dadurch gekennzeichnet, dass** das Nahgebietsnetz (12) drahtgebunden arbeitet.

28. System nach Anspruch 25, **dadurch gekennzeichnet, dass** das Nahgebietsnetz (12) mittels Signalübertragung durch den menschlichen Körper arbeitet.

29. System nach einem der Ansprüche 25 bis 28, **dadurch gekennzeichnet, dass** alle Komponenten der Navigationsvorrichtung als physikalisch eigenständige Komponenten ausgeführt und vernetzt sind.

30. System nach einem der Ansprüche 25 bis 28, **dadurch gekennzeichnet, dass** einige Komponenten der Navigationsvorrichtung mit anderen Komponenten dieser Navigationsvorrichtung physikalisch integriert sind und dass die integrierten Komponenten miteinander vernetzt sind.

31. System nach Anspruch 30, **dadurch gekennzeichnet, dass** das Anzeigegerät (1) zusammen mit einem oder mehreren der weiteren Sensoren (9, 10) und/oder Navigations- und Richtungsquellen (7, 8) in einem gemeinsamen Gehäuse, z.B. einem Uhrgehäuse, integriert sind.

32. System nach Anspruch 30, **dadurch gekennzeichnet, dass** die Steuerungseinheit (4) mit den Kontextquellen (5) und der Karten-Quelle (11) sowie mit dem Aggregator (6) in einem gemeinsamen Gehäuse, z.B. in einem Mobiltelefon, integriert ist.

33. System nach Anspruch 30, **dadurch gekennzeichnet, dass** sich die Integration auf die Verwendung eines gemeinsamen Gehäuses oder einer gemeinsamen Halterung für die zu integrierenden Komponenten beschränkt.

34. System nach Anspruch 30, **dadurch gekennzeichnet, dass** die Integration die Verwendung gemeinsamer Funktionsteile für die zu integrierenden Komponenten umfasst, z.B. eine gemeinsame Stromversorgung, gemeinsame Antennen, Funkeinheiten oder Ein/Ausgabe-Einheiten.

35. System nach Anspruch 30, **dadurch gekennzeichnet, dass** die Integration von Komponenten der Navigationsvorrichtung auf Software-Ebene stattfindet, so dass die Komponenten als Software-Module auf einer gemeinsamen Rechnerplattform abgebildet werden und ablaufen.

36. System nach Anspruch 1, **dadurch gekennzeichnet, dass** die Indoor-Infrastruktur (13) in das Nahgebietsnetz (12) eingebunden ist.

37. System nach Anspruch 36, **dadurch gekennzeichnet, dass** die Komponenten der Indoor-Infrastruktur (13) temporär als Netz-Knoten in diesem Netz eingefügt sind, z.B. nach dem aus dem sogenannten "Ad-Hoc-Networking"-Prinzip bekannten Verfahren.

38. System nach einem der vorhergehenden Ansprüche, **dadurch gekennzeichnet, dass** das Anzeigegerät (1) ein visuell arbeitendes Ausgabegerät ist, welches die Wegweisungsinformationen in Form von Symbolen und/oder Texten anzeigt.

39. System nach einem der Ansprüche 1 bis 37, **dadurch gekennzeichnet, dass** das Anzeigegerät (1) ein akustisch arbeitendes Ausgabegerät ist.

40. System nach einem der Ansprüche 1 bis 37, **dadurch gekennzeichnet, dass** das Anzeigegerät (1) ein Vibrationsmelder ist, bei dem durch die Anzahl und Dauer einzelner Vibrationsvorgänge die auf Grund der Wegweisungsinformationen vorzunehmenden Bewegungen festgelegt sind.

41. System nach einem der vorhergehenden Ansprüche, **dadurch gekennzeichnet, dass** das Anzeigegerät (1) ein am Handgelenk von Personen tragbares Gerät ist, das mit einer Armbanduhr integrierbar ist.

42. System nach einem der Ansprüche 1 bis 39, **dadurch gekennzeichnet, dass** das Anzeigegerät (1) ein an einem Fahrradlenker anbringbares Gerät ist.

43. System nach einem der Ansprüche 1 bis 40, **dadurch gekennzeichnet, dass** das Anzeigegerät ein an einem Helm montiertes Gerät ist.

44. System nach einem der Ansprüche 1 bis 38, **dadurch gekennzeichnet, dass** das Anzeigegerät (1) ein in eine Brille projizierendes Gerät ist.

## Claims

1. System for providing navigation information for persons inside and outside buildings using hardware and software components which include an infrastructure for the emission of navigation signals and a portable navigation device configured to receive said navigation signals, which, besides a satellite navigation receiver, comprises as navigation sources (7) at least one further receiver for receiving navigation signals of other types inside a building, and with which are further associated: a control unit (4) for processing the received navigation signals, a direction source (8) indicating the momentary orientation of the navigation device in a space, and a display device (1) for displaying the navigation information determined from the received navigation signals in the control unit, **characterized in that** said at least one further receiver of said portable navigation device is configured to receive indoor navigation signals in the form of LORAN-C signals and/or indoor UWB ("Ultra-Wideband") signals and/or indoor WLAN signals and/or indoor Bluetooth signals, infrared signals, ultrasound signals and/or indoor Zigbee signals and/or RFID transponder signals or similar radio signals, **in that**, for the emission of said indoor navigation signals, an indoor infrastructure (13) is provided in a respective building and eventually also in such areas outside a building that are not or poorly suited for receiving satellite navigation signals because of their sensitivity to interferences, said infrastructure being formed by LORAN-C, UWB, WLAN, or Bluetooth radio stations or beacons, RFID transponders, signal sources for infrared or ultrasound locating and/or the like, **in that** the control unit (4) uses the received navigation signals to calculate navigation information from a starting point to a destination, **in that** an aggregator (6) is provided in said navigation device for controlling the control unit, said aggregator using the navigation sources (7) and the direction sources (8) and possibly other sensors (9) to determine a probability density of the position and the direction in which the display device (1) of the navigation device is held, **in that**, for a combination of some or all components of the navigation device carried by a person, a local area network (12) is provided serving the communication among the components combined, and **in that** the navigation information (16, 17) is displayed on the display device.

2. System of claim 1, **characterized in that**, by means of calculations in the control unit (4), the navigation information is updated upon every movement of the user carrying the navigation device so that a dynamic route calculation is obtained.

3. System of claim 1 or 2, **characterized in that** said control unit (4) is housed in the navigation device that is adapted to be carried on a person's body.

4. System of one of claims 1 or 2, **characterized in that** said control unit (4) is not physically housed in the navigation device adapted to be carried on a person's body, but is accommodated centrally at a remote place and in communication with the navigation device.

5. System of one of claims 1 or 2, **characterized in that** said control unit (4) is only partly housed physically in the navigation device adapted to be carried on a person's body, while the rest is accommodated centrally at a remote place and in communication with the navigation device.

6. System of one of the preceding claims, **characterized in that** an altimeter and/or a cinometer and/or a pedometer (9) and/or an accelerometer and/or a cardiac frequency meter (10) is provided as a further sensor.

7. System of one of the preceding claims, **characterized in that**, besides said display device (1), the navigation device comprises one or a plurality of further output devices (2, 3) which may be realized in the form of an acoustic output device (3), a vibration device (2), further visual display devices and/or devices operating through the sense of touch.

8. System of claim 7, **characterized in that** an acoustic output device (3) used and/or a further visual output device used is connected with the control unit (4) of the navigation device through short range communication (12).

9. System of one of the preceding claims, **characterized in that** the navigation device is provided with one or a plurality of context sources (5) providing further information to the control unit (4) that contain information about the user which are relevant to the navigation information and the representation thereof in the display device (1) or on the further output devices (2, 3).

10. System of one of the preceding claims, **characterized in that** the navigation device is provided with a map source (11) providing map information about the local surroundings to the control unit (4) and/or other components of the navigation device or provides information of a kind useful to the navigation sources (7) and/or direction sources (8) and/or the control unit (4) to complete or improve their respective tasks.

11. System of claim 9 or 10, **characterized in that** said context sources (5) and the map source (11) themselves use radio communication, e.g. via GPRS, GSM, UMTS, WLAN, Bluetooth, UWB, to receive the respective context data or maps and data on the surroundings from a unit situated in the infrastructure or in the internet.

12. System of one of claims 9 to 11, **characterized in that** the context sources (5) and/or the map source (11) comprise a memory in which the respective data are available temporarily.

13. System of one of the preceding claims, **characterized in that** the aggregator (6) provided in the navigation device combines the signals from the navigation sources (7) and the direction sources (8) and possibly the further sensors (9, 10) and determines therefrom a new position and/or direction information.

14. System of claim 13, **characterized in that** the determination of the new position and/or direction information is performed by selection, averaging or using algorithms according to the known Soft Location (SoLo) method.

15. System of claim 13, **characterized in that** the determination of the new position and/or direction information is performed according to the Monte Carlo "Particle Filter" method.

16. System of claim 13, **characterized in that** the determination of the new position and/or direction information is performed according to the Kalman filter method.

17. System of claim 13, **characterized in that** the direction information made available to the aggregator (6) or intermediate values of the direction information already calculated by the same are converted by the aggregator such that they refer to the position of the display device (1).

18. System of claim 17, **characterized in that**, for such a conversion, the solid angle differences between the position of the sensors of the direction sources (8) and the position of the display device (1) at the moment of reading are used in the aggregator (6) or the control unit (4).

19. System of claim 18, **characterized by** a pre-configuration to fixed values resulting from the geometry of the system components.

20. System of claim 1, **characterized in that** the control unit (4) uses the quality of the position information and of the direction information at the output of the aggregator (6) to adjust the navigation calculation thereto.

21. System of claim 20, **characterized in that** in the presence of ambiguities in the position information, all ambiguities are employed as hypothetical starting points in the route calculation performed in the control unit (4) and that such routes are preferred for which the next instruction/instructions is/are identical.

22. System of claim 20, **characterized in that** the route calculation in the control unit (4) uses a cost function that also includes the uncertainty of the momentary location, so that also in this case such routes are preferred for which the present uncertainty of the momentary location has the least effect.

23. System of claim 20, **characterized in that** the control unit (4) evaluates the routes such that such routes are preferred for which it can be expected that navigation and directions will improve if its instructions are followed.

24. System of claim 23, **characterized in that** the control unit (4) prefers such routes that give directions that, with high probability, prompt a user to come near one or a plurality of large windows or similar structures or openings allowing to receive satellite navigation signals with the navigation device.

25. System of claim 1, **characterized by** an implementation of the local area network (12) as a so-called "Body Area Network", wherein all those components that use the local area network are equipped with corresponding network adapters and associated control means.

26. System of claim 25, **characterized in that** the local area network (12) operates using a radio technology.

27. System of claim 25, **characterized in that** the local area network (12) operates as a wired network.

28. System of claim 25, **characterized in that** the local area network (12) operates using signal transmission via the human body.

29. System of one of claims 25 to 28, **characterized in that** all components of the navigation device are designed and linked as physically independent components.

30. System of one of claims 25 to 28, **characterized in that** some components of the navigation device are physically integrated with other components of this navigation device and that the integrated components are linked among each other.

31. System of claim 30, **characterized in that** the display device (1) is integrated in a common housing, e.g. a watchcase, together with one or a plurality of the further sensors (9, 10) and/or navigation and direction sources (7, 8).

32. System of claim 30, **characterized in that** the control unit (4) is integrated in a common housing, e.g. a mobile phone, together with the context sources (5) and the map source (11), as well as with the aggregator (6).

33. System of claim 30, **characterized in that** the integration is limited to the use of a common housing or a common holder for the components to be integrated.

34. System of claim 30, **characterized in that** the integration comprises the use of common functional parts for the components to be integrated, e.g. a common power supply, common antennas, radio units or input/output units.

35. System of claim 30, **characterized in that** the integration of components of the navigation device occurs on a software level so that all components are mapped and executed as software modules on a common computer platform.

36. System of claim 1, **characterized in that** the indoor infrastructure (13) is integrated in the local area network (12).

37. System of claim 36, **characterized in that** the components of the indoor infrastructure (13) are temporarily inserted as network nodes in this network, e.g. according to the method known from the so-called "Ad-Hoc-Networking" principle.

38. System of one of the preceding claims, **characterized in that** the display device (1) is a visual output device that indicates the navigation information in the form of symbols and/or texts.

39. System of one of claims 1 to 37, **characterized in that** the display device (1) is an acoustic output device.

40. System of one of claims 1 to 37, **characterized in that** the display device (1) is a vibration indicator, wherein the movements to be performed because of the navigation information are defined by the number and duration of individual vibration events.

41. System of one of the preceding claims, **characterized in that** the display device (1) is a device adapted to be carried on the wrist of a person, said device being adapted for integration with a wristwatch.

42. System of one of claims 1 to 39, **characterized in that** the display device (1) is a device adapted to be mounted on a bicycle handlebar.

43. System of one of claims 1 to 40, **characterized in that** the display device is a device adapted to be mounted to a casket.

44. System of one of claims 1 to 38, **characterized in that** the display device (1) is a device projecting into spectacles.

## Revendications

1. Système destiné à la mise à disposition d'informations de navigation pour des personnes se situant à l'intérieur ou à l'extérieur de bâtiments, utilisant des composants de matériel ou de logiciel, y inclus une infrastructure pour l'émission de signaux de navigation et un dispositif portable configuré pour recevoir ces signaux de navigation, qui comprend comme sources de navigation (7), à part un récepteur à navigation par satellites, au moins un autre récepteur pour recevoir des signaux de navigation d'autres types dans bâtiments et auquel sont associés en outre une unité de commande (4) pour traiter les signaux de navigation reçus, une source de direction (8) indiquant l'orientation momentanée dudit dispositif de navigation dans l'espace, et un appareil d'affichage (1) pour l'affichage des informations de guidage déterminés à partir des signaux de navigation reçus dans ladite unité de commande, **caractérisé en ce que** ledit au moins un autre récepteur dudit dispositif de navigation portable est configuré pour recevoir des signaux de navigation du type indoor sous la forme de signaux LORAN-C et/ou de signaux Indoor-UWB (Ultra Wideband") et/ou de signaux Indoor-WLAN et/ou de signaux Indoor-Bluetooth, de signaux infrarouges, de signaux ultrasons et/ou de signaux Indoor-Zigbee et/ou de signaux de transpondeur à RFID ou de signaux radioélectriques similaires, **en ce que** pour l'émission des signaux de navigation du type indoor, une infrastructure du type indoor (13) est prévue dans un bâtiment respectif et éventuellement dans des régions situées à l'extérieur d'un bâtiment, qui ne sont pas ou mal appropriées à recevoir des signaux de navigation par satellite à cause de leur susceptibilité à des interférences, ladite infrastructure étant formée par des stations de radio ou des radiophares du type LORAN-C, UWB, WLAN ou Bluetooth, des transpondeurs à RFID, de sources de signaux de localisation par infrarouge ou ultrason et/ou similaire, **en ce que** l'unité de commande (4) utilise les signaux de navigation reçus pour calculer des informations de guidage à partir d'un point de départ jusqu'à une destination, **en ce que** le dispositif de navigation est muni d'un aggrégateur (6) commandant ladite unité de commande (4), ledit aggrégateur utilisant les sources de navigation (7) et les sources de direction (8) et éventuellement des capteurs additionnels (9) pour déterminer une densité de probabilité de la location et de la direction dans laquelle l'appareil d'affichage (1) dudit dispositif de navigation (1) est orienté, **en ce qu'**un réseau local est prévu afin de lier quelques ou tous les composants d'un dispositif de navigation porté par une personne, ledit réseau local servant la communication des composants liés, et **en ce que** les informations de guidage (16, 17) sont présentées sur l'appareil d'affichage.

2. Système selon la revendication 1, **caractérisé en ce que** les informations de guidage sont actualisées par calcul dans ladite unité de commande (4) lors de chaque mouvement d'un utilisateur portant ledit dispositif de navigation, de sorte qu'un calcul de route dynamique est obtenu.

3. Système selon la revendication 1 ou 2, **caractérisé en ce que** l'unité de commande (4) est accommodée dans le dispositif de navigation adapté d'être porté sur le corps d'une personne.

4. Système selon la revendication 1 ou 2, **caractérisé en ce que** l'unité de commande (4) non est physiquement accommodée dans le dispositif de navigation adapté d'être porté sur le corps d'une personne, mais de manière centrale à une location distante et avec lien de communication avec ledit dispositif de navigation.

5. Système selon la revendication 1 ou 2, **caractérisé en ce que** ladite unité de commande (4) est seulement partiellement physiquement accommodée dans le dispositif de navigation adapté d'être porté sur le corps d'une personne, et l'autre part est situé de manière centrale à une location distante et avec lien de communication avec ledit dispositif de navigation.

6. Système selon l'une quelconque des revendications précédentes, **caractérisé en ce que** le capteur additionnel prévu est un altimètre et/ou un mesureur de mouvement et/ou un podomètre et/ou un accéléromètre et/ou un cardio-fréquencemètre (10).

7. Système selon l'une quelconque des revendications précédentes, **caractérisé en ce qu'**à part le dispositif d'affichage (1), un ou plusieurs autres appareils de sortie (2,) sont prévus dans ledit dispositif de navigation, qui peuvent être réalisés sous forme d'un appareil de sortie acoustique (3), un appareil vibrant (2), autres appareils d'affichage visuels et/ou appareils utilisant le sens du touche.

8. Système selon la revendication 7, **caractérisé en ce qu'**un appareil de sortie (3) utilisé et/ou un autre appareil de sortie visuel utilisé est lié par communication à distance courte (12) à ladite unité de commande (4) dudit dispositif de navigation.

9. Système selon l'une quelconque des revendications précédentes, **caractérisé en ce qu'**une ou plusieurs sources de contexte (5) sont prévues dans ledit dispositif de navigation, qui fournissent d'autres informations à ladite unité de commande (4) incluant des informations sur l'utilisateur qui sont importantes pour les informations de guidage et leur présentation sur l'appareil d'affichage (1) ou sur les autre appareils de sortie (2, 3).

10. Système selon l'une quelconque des revendications précédentes, **caractérisé en ce qu'**une source de cartes (11) est prévue dans ledit dispositif de navigation, fournissant des informations de cartes de l'environnement local à ladite unité de commande (4) et/ou autres composants dudit dispositif de navigation ou fournissant des informations à l'aide desquelles les sources de navigation (7) et/ou les sources de direction (8) et/ou ladite unité de commande (4) peuvent remplir ou perfectionner leurs tâches respectives.

11. Système selon la revendication 9 ou 10, **caractérisé en ce que** les sources de contexte (5) et les sources de cartes (11) elles-mêmes s'appuient sur la radio communication par exemple à travers GPRS, GSM, UMTS, WLAN, Bluetooth, UWB, pour obtenir les données de contexte ou les cartes et les données d'environnement respectives à partir d'une unité existant dans ladite infrastructure ou dans l'internet.

12. Système selon l'une des revendications 9 à 11, **caractérisé en ce que** les sources de contexte (5) et/ou la source de cartes (11) comprennent une mémoire dans laquelle lesdites données respectives sont temporairement mises à disposition.

13. Système selon l'une quelconques des revendications précédentes, **caractérisé en ce que** l'aggrégateur (6) prévu dans le dispositif de navigation combine les signaux des sources de navigation (7) et des sources de direction (8) et éventuellement des capteurs additionnels (9, 10) et génère de ces signaux une position et/ou information de direction nouvelles.

14. Système selon la revendication 13, **caractérisé en ce que** la détermination de la position et/ou information de direction nouvelles est effectuée par sélection, calcul de la moyenne ou par des algorithmes suivant le procédé connu Soft-Location (SoLo).

15. Système selon la revendication 13, **caractérisé en ce que** la détermination de la position et/ou information de direction nouvelles est effectuée selon le procédé Monte-Carlo-"Particle-Filter".

16. Système selon la revendication 13, **caractérisé en ce que** la détermination de la position et/ou information de direction nouvelles est effectuée selon le procédé du filtre de Kalman.

17. Système selon la revendication 13, **caractérisé en ce que** l'aggrégateur (6) convertit les informations de direction mises à sa disposition ou des valeurs intermédiaires des informations de directions déjà calculées par l'aggrégateur, de manière qu'elles se réfèrent à la position dudit appareil d'affichage (1).

18. Système selon la revendication 17, **caractérisé en ce que**, pour cette conversion, l'on utilise dans l'aggrégateur (6) ou dans l'unité de commande (4) les différences des angles solides entre la position des capteurs des sources de direction (8) et la position de l'appareil d'affichage (1) au moment de sa lecture.

19. Système selon la revendication 18, **caractérisé par** une pré-configuration avec des valeurs fixes résultant de la géométrie des composants du système.

20. Système selon la revendication 1, **caractérisé en ce que** l'unité de commande (4) utilise la qualité des informations de position et des informations de direction pour adapter le calcul du guidage à celles-ci.

21. Système selon la revendication 20, **caractérisé en ce qu'**en présence d'ambiguïtés dans l'information de position, toutes les ambiguïtés sont insérées comme hypothèses sur le point de départ dans le calcul de la route dans l'unité de commande (4) et de telles routes sont préférées pour lesquelles la/les prochaine/-s instruction/-s est/sont identique/-s.

22. Système selon la revendication 20, **caractérisé en ce que** le calcul de la route dans l'unité de commande (4) utilise une fonction de coûtes qui aussi comprend l'incertitude de la location actuelle, de sorte que, dans ce cas aussi, de telles routes sont préférées pour lesquelles l'incertitude momentanée de la location actuelle à l'effet le plus négligeable.

23. Système selon la revendication 20, **caractérisé en que** l'unité de commande (4) applique l'évaluation des routes de façon que de telles routes sont préférées pour lesquelles l'on peut compter que l'instruction sur la navigation et la direction s'améliorera si sa/ses instruction/-s est/sont suivie/-s.

24. Système selon la revendication 23, **caractérisé en ce que** l'unité de commande (4) préfère de telles routes qui donnent des instructions menant l'utilisateur, avec grande probabilité, près d'une ou plusieurs grande fenêtres ou des structures ou ouvertures similaires permettant la réception de signaux de navigation à satellite par le dispositif de navigation.

25. Système selon la revendication 1, **caractérisé par le fait que** le réseau local (12) est réalisé sous forme d'un réseau appelé "Body Area Network", dans lequel tous ces composants. qui utilisent ledit réseau local, comprennent des adaptateurs des réseaux correspondants et des moyens de commande associés.

26. Système selon la revendication 25, **caractérisé en ce que** le réseau local (12) fonctionne utilisant une technologie de radio.

27. Système selon la revendication 25, **caractérisé en ce que** le réseau local (12) fonctionne sur fil.

28. Système selon la revendication 25, **caractérisé en ce que** le réseau local (12) fonctionne par transmission de signaux par moyen du corps humain.

29. Système selon l'une des revendications 25 à 28, **caractérisé en ce que** tous les composant dudit dispositif de navigation sont réalisés et interconnectés comme composants physiquement indépendants.

30. Système selon l'une des revendications 25 à 28, **caractérisé en ce que** quelques uns des composants du dispositif de navigation sont physiquement intégrés avec autres composants de ce dispositif de navigation et que les composants intégrés sont interconnectés.

31. Système selon la revendication 30, **caractérisé en ce que** l'appareil d'affichage (1) est intégré dans un boîtier commun, par exemple un boîtier de montre, conjointement avec un ou plusieurs des capteurs additionnels (9, 10) et/ou des sources de navigation ou de direction (7, 8).

32. Système selon la revendication 30, **caractérisé en ce que** l'unité de commande (4) est intégrée dans un boîtier commun, par exemple un téléphone portable, conjointement avec les sources de contexte (5) et la source de cartes (11) ainsi qu'avec l'aggrégateur (6).

33. Système selon la revendication 30, **caractérisé en ce que** l'intégration se réfère à l'utilisation d'un boîtier commun ou d'un support commun pour les composants à intégrer.

34. Système selon la revendication 30, **caractérisé en ce que** l'intégration comprend l'utilisation de parties fonctionnelles communes pour les composants à intégrer, par exemple une alimentation en électricité commune, des antennes communes, des unités radio et/ou des unités entrée/sortie.

35. Système selon la revendication 30, **caractérisé en ce que** l'intégration de composants dudit dispositif de navigation est réalisée sur le plan logiciel, de manière que les composants sont reproduits et exécutés comme modules de logiciel sur une plateforme d'ordinateur commune.

36. Système selon la revendication 1, **caractérisé en ce que** l'infrastructure du type indoor (13) est intégrée dans le réseau local (12).

37. Système selon la revendication 36, **caractérisé en ce que** les composants de ladite infrastructure du type indoor (13) sont insérés temporairement dans ledit réseau comme noeuds de réseau, par exemple selon le procédé connu du principe appelé "Ad-Hoc-Networking".

38. Système selon l'une quelconque des revendications précédentes, **caractérisé en ce que** l'appareil d'affichage (1) est un appareil de sortie fonctionnent de manière visuelle, affichant les informations de guidage sous forme de symboles et/ou textes.

39. Système selon l'une des revendications 1 à 37, **caractérisé en ce que** l'appareil d'affichage (1) est un appareil de sortie fonctionnant de manière acoustique.

40. Système selon l'une des revendications 1 à 37, **caractérisé en ce que** l'appareil d'affichage (1) est un indicateur à vibration dans lequel la nombre et la durée des évènements de vibrations individuels définissent les mouvement à faire selon les informations de guidage.

41. Système selon l'une quelconque des revendications précédentes, **caractérisé en ce que** l'appareil d'affichage (1) est un appareil adapté à être porté sur le poignet d'une personne, intégrable avec une montre-bracelet.

42. Système selon l'une des revendications 1 à 39, **caractérisé en ce que** l'appareil d'affichage (1) est un appareil adapté à être fixé sur le guidon d'une bicyclette.

43. Système selon l'une des revendications 1 à 40, **caractérisé en ce que** l'appareil d'affichage est un appareil adapté à être fixé sur un casque.

44. Système selon l'une des revendications 1 à 38, **caractérisé en ce que** l'appareil d'affichage (1) est un appareil projetant dans des lunettes.
